# EUROPÄISCHE PATENTSCHRIFT

(11) **EP 2 007 996 B1**
(45) Veröffentlichungstag und Bekanntmachung des Hinweises auf die Patenterteilung: **30.06.2010**
(21) Anmeldenummer: 07724022.4
(22) Anmeldetag: 05.04.2007
(51) Int. Cl.: F16D 3/74

(54) **ELASTISCHE WELLENKUPPLUNG MIT UNGLEICHEN GUMMIKÖRPERN**
ELASTIC SHAFT COUPLING HAVING NON-IDENTICAL RUBBER ELEMENTS
ACCOUPLEMENT D'ARBRES ELASTIQUE AVEC CORPS EN CAOUTCHOUC INEGAUX

(30) Priorität: 08.04.2006 DE 102006016651
(43) Veröffentlichungstag der Anmeldung: 31.12.2008
(73) Patentinhaber: Hackforth GmbH, 44653 Herne (DE)
(72) Erfinder: BAIKIE, John, 46286 Dörsten (DE)
(74) Vertreter: Behrendt, Arne
(86) Internationale Anmeldenummer: PCT/EP2007/003081
(87) Internationale Veröffentlichungsnummer: WO 2007/115783

(56) Entgegenhaltungen:
- DE-A1- 19 703 936
- DE-A1- 19 714 420
- GB-A- 2 238 101
- US-A- 2 207 496
- US-A- 3 023 593

## Beschreibung

Die vorliegende Erfindung betrifft eine elastische Wellenkupplung mit einer antriebsseitigen und mit einer abtriebsseitigen mechanischen Schnittstelle, beide Schnittstellen jeweils zum Anschließen der Wellenkupplung an ein benachbartes Maschinenelement, wobei die Wellenkupplung mindestens zwei zwischen antriebsseitiger und abtriebsseitiger Schnittstelle hintereinander geschaltete, elastische Gummikörper aufweist, deren axiale Materialstärke jeweils mit wachsendem radialen Abstand zur Mittelachse der Wellenkupplung zunimmt.

Bekannt ist eine derartige Wellenkupplung aus der deutschen Offenlegungsschrift DE 197 14 420 A1 derselben Anmelderin. Auch US 3 023 593 zeigt eine derartige elastische Wellenkupplung.

Elastische Wellenkupplungen der eingangs genannten Art dienen dazu, Drehschwingungen in Antriebssträngen zu dämpfen. Darüber hinaus gleichen sie radialen und axialen Versatz einzelner Abschnitte des Antriebsstrangs zueinander aus. So wird beispielsweise das Getriebe eines Schiffes in der Regel fest gelagert, währenddessen der Schiffsdiesel elastisch gelagert wird. Der durch Vibrationen und Rumpfverformungen bedingte Versatz des Motors wird durch eine elastische Wellenkupplung, welche zwischen Motor und Getriebe angeordnet ist, kompensiert. Darüber hinaus dämpft die elastische Wellenkupplung Drehschwingungen, die in dem System entstehen.

Die elastischen Gummikörper derartiger Kupplungen haben die Gestalt eines Rotationskörpers, dessen Rotationsfläche in etwa V-förmig ist. Auf Grund dieser Geometrie nimmt die axiale Materialstärke des Gummis mit wachsendem radialen Abstand zur Mittelachse der Wellenkupplung zu, um eine gleichmäßige Spannungsverteilung innerhalb des Gummikörpers über seinen gesamten Durchmesser zu gewährleisten.

Bei der Auswahl der Kupplung für den vorgegebenen Antriebsstrang sind die einzelnen Torsionsfederkonstanten und Massenträgheitsmomente der Gummikörper und ihrer flankierenden Scheiben wesentliche Parameterwerte. Um diese konstruktiv zu variieren, wurden in der Vergangenheit der Zuwachs der Materialstärken der Gummikörper ebenso verändert wie die materialspezifischen Federkonstanten. Dabei wurden allerdings die axialen Materialstärken der Gummikörper immer in einem identischem Maß variiert, was dazu führte, dass die Gummikörper stets in einer zur Mittelachse der Wellenkupplung senkrechten Spiegelebene spiegelsymmetrisch erscheinen. Da auch für beide Gummikörper stets dasselbe Material vorgesehen wurde, führte dies letztendlich dazu, dass die Torsionsfederkonstanten der einzelnen Gummikörper annähernd identisch waren. Die daraus resultierende Gummimenge wurde als gegeben hingenommen.

Die Gummimenge stellt jedoch einen erheblichen Kostenfaktor einer Wellenkupplung dar. Um deren Preis zu senken, liegt der vorliegenden Erfindung die Aufgabe zugrunde, die Gummimenge einer Wellenkupplung der eingangs genannten Art unter Beibehaltung ihrer elastischen Eigenschaften zu verringern.

Diese Aufgabe wird mit einer elastischen Wellenkupplung mit dem Merkmalen des Anspruchs 1 gelöst.

Dies gelingt überraschenderweise dadurch, dass die jeweiligen Gummikörper hinsichtlich ihrer Torsionssteifigkeit , also ihres Quotienten aus Torsionsmoment und Torsionswinkel, ungleich ausgeführt werden und zwar so ungleich, dass die Torsionssteifigkeit eines der beiden Gummikörper stets mindestens anderthalb mal so groß ist wie die Torsionssteifigkeit des anderen Gummikörpers.

Die Abkehr von der Gleichheit der Tprsionsteifigkeiten der einzelnen Gummikörper eröffnet einen neuen Freiheitsgrad in der Dimensionierung der Kupplung. Dieser gestattet es, die erforderliche Gesamtgummimenge zu reduzieren. Das jeweilige Verhältnis der Federsteifigkeiten ist abhängig von dem Gesamtsystem "Antriebsstrang", so dass eine allgemeingültige Bemessungsregel nicht anzugeben ist. Es hat sich allerdings gezeigt, dass die Materialeinsparungsmöglichkeiten besonders groß dann sind, wenn die Federsteifigkeiten um den Faktor drei voneinander abweichen.

Die individuelle Torsionsfedersteifigkeit eines Gummikörpers ist einerseits abhängig von der materialspezifischen Federkonstante des Werkstoffes und andererseits von der axialen Stärke des Gummikörpers. Zur konstruktiven Umsetzung der ungleichen Federkonstanten ist die axialen Stärken der Gummikörper zu variieren und zwar dergestalt, dass die axiale Materialstärke des weicheren der beiden Gummikörper bei einem radialen Abstand stets mindestens anderthalb mal so groß ist wie die axiale Materialstärke des härteren Gummikörpers bei demselben radialen Abstand zur Mittelachse der Wellenkupplung. Eine so ausgeführte Wellenkupplung weist folglich keine Spiegelebene bezüglich der hintereinander geschalteten Gummikörper auf. Durch diese Maßnahme kann der Gummieinsatz erheblich gesenkt werden.

Dieser Einspareffekt wird durch eine möglichst große Ungleichheit der Materialstärken begünstigt. So sind besonders gute Einsparmöglichkeiten bei Wellenkupplungen gegeben, die einen Gummikörper aufweisen, der radial nach außen hin stets dreimal so dick ist wie der andere Gummikörper. Das konkrete Verhältnis der Materialstärken hängt jedoch von den übrigen Komponenten des Antriebsstrangs und deren dynamischen Verhaltensweisen ab, so dass keine allgemeingültigen Materialstärkenverhältnisse anzugeben sind. Allerdings sind die beschriebenen Einspareffekte erst bei einem Verhältnis von 1,5 spürbar.

Darüber hinaus empfiehlt es sich, die Gummikörper nicht nur hinsichtlich ihrer Geometrie unterschiedlich zu gestalten, sondern auch hinsichtlich ihrer materialspezifischen Federkonstanten. Mit Hilfe von Zuschlagsstoffen lässt sich die Elastizität des Gummis innerhalb einer gewissen Bandbreite variieren. Es empfiehlt sich, diese Variable bei der Auslegung der Kupplung zu berücksichtigen und unterschiedliche, materialspezifischen Federkonstanten vorzusehen.

Im Übrigen können die elastischen Eigenschaften eines Gummikörper durch eine Segmentierung desselben in Umfangsrichtung variiert werden. Auf diese Weise entsteht ein Gummikörper, der sich aus einer Mehrzahl von Segmenten zusammensetzt, die sich über einen bestimmten Winkelabschnitt erstrecken. Auch ist es möglich, den Gummikörper axial zu lochen, um die Ventilation der Gummikörper zu optimieren.

Die vorliegende Erfindung soll nun anhand eines Ausführungsbeispiels näher erläutert werden. Dafür zeigt:

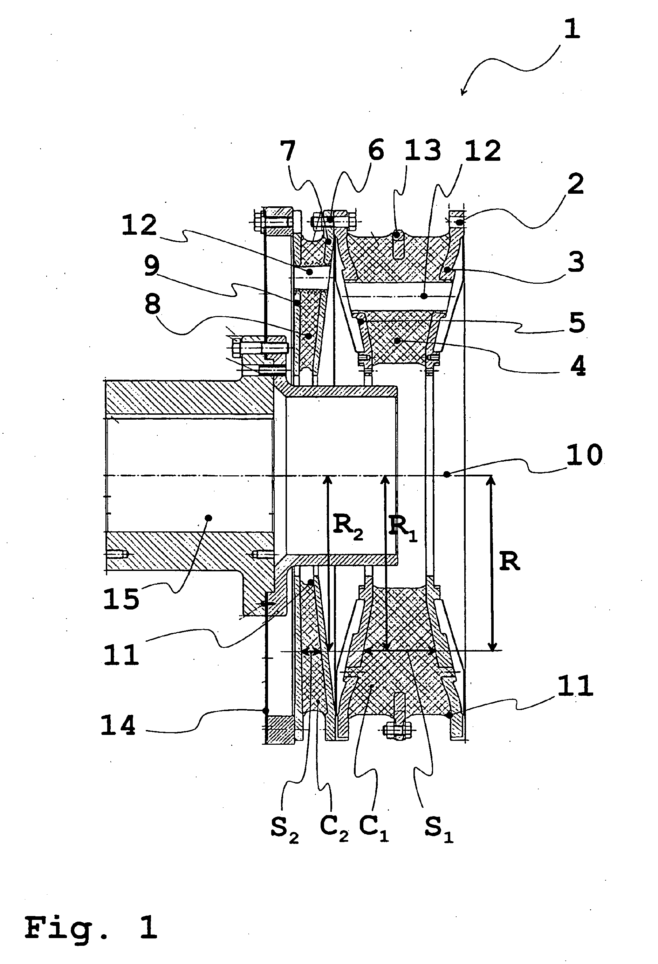

- Fig. 1:: Wellenkupplung mit zwei ungleichen Gummikörpern.

Die elastische Wellenkupplung 1 überträgt das Drehmoment eines nicht dargestellten Motors von der rechten Seite der Wellenkupplung 1 auf ein nicht dargestelltes Getriebe auf der linken Seite der Wellenkupplung 1. Hierzu weist die Wellenkupplung 1 auf der rechten Seite eine antriebsseitige mechanische Schnittstelle 2 in Gestalt eines Flansches 2 auf, an dem die nicht dargestellte Motorwelle angeflanscht wird. Der Flansch 2 ist Bestandteil einer ersten Scheibe 3, auf der ein erster Gummikörper 4 aufvulkanisiert ist. Mit seiner linken Flanke ist der Gummikörper 4 auf einer zweiten Scheibe 5 aufvulkanisiert. Die axiale Materialstärke S₁ des ersten Gummikörpers 4 ist das Maß zwischen den beiden Scheiben 3, 5, die den ersten Gummikörper 4 flankieren.

Die zweite Scheibe 5 ist über eine Verschraubung 6 mit einer dritten Scheibe 7 verschraubt, auf welcher ein zweiter Gummikörper 8 aufvulkanisiert ist. Dieser zweite Gummikörper 8 wird an seiner anderen Flanke von einer vierten Scheibe 9 begrenzt.

Die beiden Gummikörper 4, 8 unterscheiden sich hinsichtlich ihrer Gestalt und ihrer Torsionssteifigkeit erheblich. So ist die axiale Materialstärke S₁ des ersten Gummikörpers 4 stets dreimal so groß wie die axiale Materialstärke S₂ des zweiten Gummikörpers 8 auf demselben radialen Abstand R = R₁ = R₂. Die axiale Materialstärke S₁ und S₂ der Gummikörper 4, 8 versteht sich als das Maß zwischen den flankierenden Scheiben 3, 5 bzw. 7, 9, das mit dem radialen

Abstand R zur Mittelachse 10 der Wellenkupplung 1 jeweils ansteigt. Zur Materialstärke zählen im Sinne des vorliegenden Gebrauchsmusters nicht die spitz zulaufenden Randbereiche 11 der Gummikörper 4, 8, sowie axiale Lochungen 12, die der Ventilation der Gummikörper 4, 8 dienen. Für die Bemessung der axialen Materialstärke S₁ des ersten Gummikörpers 4 im äußeren Randbereich ist unbeachtlich ein in den ersten Gummikörper 4 einvulkanisierter Stützring 13.

Der extreme Unterscheid in den axialen Materialstärken S₁ und S₂ führt dazu, dass die Torsionssteifigkeiten C₁ und C₂ der Gummikörper 4, 8 ebenso unterschiedlich sind. Da die Steifigkeit mit der eingesetzten Gummimenge sinkt, ist die Torsionssteifigkeit C₂ des zweiten, schmaleren Gummikörpers 8 etwa dreimal so hoch wie die Torsionssteifigkeit C₁ des breiteren, ersten Gummikörpers 4. Das Verhältnis C₂ zu C₁ und S₁ zu S₂ beträgt jeweils drei, da derselbe Gummiwerkstoff mit derselben materialspezifischen Federkonstante eingesetzt wurde. Die Verwendung unterschiedlich additivierter Gummisorten eröffnet einen weiteren Parameter zur Optimierung des Gesamtgummivolumens.

An der vierten Scheibe 9 ist eine Membranfeder 14 angeschraubt, welche das Drehmoment weiter auf eine Nabe 15 überträgt, die als abtriebsseitige mechanische Schnittstelle 15 dient. In die Nabe 15 wird die Eingangswelle eines Getriebes eingesteckt.

Bei der dargestellten Wellenkupplung 1 dienen beide Gummikörper 4, 8 der Drehschwingungsdämpfung. Zudem gleicht der erste Gummikörper 4 radialen Versatz des elastisch aufgehängten Motors gegenüber dem fest aufgestellten Getriebes aus. Dies gelingt durch eine vergleichsweise große axiale Materialstärke S₁. Der zweite Gummikörper 8 weist eine um den Faktor 3 geringere axiale Materialstärke S₂ auf, weswegen er in radialer Richtung härter ist als der erste Gummikörper 1 und damit kaum Radialversatz kompensiert. Die Membranfeder 14 ist in Umfangs- und Radialrichtung steif und gleicht axiale Verlagerungen zwischen der antriebsseitigen mechanischen Schnittstelle 2 (Flansch) und der abtriebsseitigen mechanischen Schnitte 15 (Nabe) aus.

Im Vergleich zu einer elastischen Wellenkupplung mit den selben dynamischen Eigenschaften und symmetrischen Gummikörpern weist die vorliegende Kupplung eine deutlich geringere Gummimasse auf.

## Patentansprüche

1. Elastische Wellenkupplung (1), mit einer antriebsseitigen (2) und mit einer abtriebsseitigen mechanischen Schnittstelle (15), beide Schnittstellen (2, 15) jeweils zum Anschließen der Wellenkupplung (1) an ein benachbartes Maschinenelement, wobei die Wellenkupplung (1) mindestens zwei zwischen antriebsseitiger (2) und abtriebsseitiger Schnittstelle (15) hintereinander geschaltete, elastische Gummikörper (4, 8) aufweist, deren axiale Materialstärke (S₁, S₂) jeweils mit wachsendem radialen Abstand (R₁, R₂) zur Mittelachse (10) der Wellenkupplung (1) zunimmt,
**dadurch gekennzeichnet, dass** die Torsionssteifigkeit (C₂) eines der beiden Gummikörper (8) mindestens anderthalb mal so groß ist wie die Torsionssteifigkeit (C₁) des anderen Gummikörpers (4), und dass die axiale Materialstärke (S₁) eines der beiden Gummikörper (4) bei einem radialen Abstand (R₁ = R) stets mindestens anderthalb mal so groß ist wie die axiale Materialstärke (S₂) des anderen Gummikörpers (8) bei demselben radialen Abstand (R₂ = R).

2. Elastische Wellenkupplung nach Anspruch 1, **dadurch gekennzeichnet, dass** die Torsionssteifigkeit (C₂) eines der beiden Gummikörper (8) mindestens dreimal so groß ist wie die Torsionssteifigkeit (C₁) des anderen Gummikörpers (4).

3. Elastische Wellenkupplung nach Anspruch 1 oder 2, **dadurch gekennzeichnet, dass** die axiale Materialstärke (S₁) eines der beiden Gummikörper (4) bei einem radialen Abstand (R₁ = R) stets mindestens dreimal mal so groß ist wie die axiale Materialstärke (S₂) des anderen Gummikörpers (8) bei demselben radialen Abstand (R₂ = R).

4. Elastische Wellenkupplung nach einem der vorhergehenden Ansprüche, **dadurch gekennzeichnet, dass** das Material des einen Gummikörpers (4) eine andere spezifische Federsteifigkeit als das Material des anderen Gummikörpers (8) aufweist.

5. Elastische Wellenkupplung nach einem der vorhergehenden Ansprüche, **dadurch gekennzeichnet, dass** mindestens einer der Gummikörper (4, 8) segmentiert ist.

6. Elastische Wellenkupplung nach einem der vorhergehenden Ansprüche, **dadurch gekennzeichnet, dass** mindestens einer der Gummikörper (4, 8) axial gelocht ist.

## Claims

1. An elastic shaft coupling (1) comprising a mechanical interface (2) at the drive input side and a mechanical interface (15) at the drive output side, both interfaces (2, 15) for respectively connecting the shaft coupling (1) to an adjacent machine element, wherein the shaft coupling (1) has at least two elastic rubber bodies (4, 8) connected in succession between the interface (2) at the drive input side and the interface (15) at the drive output side, the axial material thickness (S₁, S₂) of the elastic rubber bodies respectively increasing with an increasing radial spacing (R₁ R₂) relative to the central axis (10) of the shaft coupling (1),
**characterised in that**
the torsional stiffness (C₂) of one of the two rubber bodies (8) is at least one and a half times as great as the torsional stiffness (C₁) of the other rubber body (4), and that the axial material thickness (S₁) of one of the two rubber bodies (4) at a radial spacing (R₁ = R) is always at least one and a half times as great as the axial material thickness (S₂) of the other rubber body (8) at the same radial spacing (R₂ = R).

2. An elastic shaft coupling according to claim 1 **characterised in that** the torsional stiffness (C₂) of one of the two rubber bodies (8) is at least three times as great as the torsional stiffness (C₁) of the other rubber body (4).

3. An elastic shaft coupling according to claim 1 or claim 2 **characterised in that** the axial material thickness (S₁) of one of the two rubber bodies (4) at a radial spacing (R₁ = R) is always at least three times as great as the axial material thickness (S₂) of the other rubber body (8) at the same radial spacing (R₂ = R).

4. An elastic shaft coupling according to one of the preceding claims **characterised in that** the material of the one rubber body (4) has a different specific spring stiffness from the material of the other rubber body (8).

5. An elastic shaft coupling according to one of the preceding claims **characterised in that** at least one of the rubber bodies (4, 8) is segmented.

6. An elastic shaft coupling according to one of the preceding claims **characterised in that** at least one of the rubber bodies (4, 8) is axially perforated.

## Revendications

1. Accouplement d'arbres élastique (1), avec une interface mécanique (15) côté menant (2) et côté mené, les deux interfaces (2, 15) respectivement pour le raccordement de l'accouplement d'arbres (1) à un élément de machine avoisinant, où l'accouplement d'arbres (1) présente au moins deux corps en caoutchouc élastique (4, 8), disposés l'un derrière l'autre entre l'interface (15) côté menant (2) et côté mené, dont l'épaisseur axiale de matériau (S₁, S₂) augmente respectivement au fur et à mesure qu'augmente la distance radiale (R₁, R₂) à l'axe médian (10) de l'accouplement d'arbres (1), **caractérisé en ce que** la rigidité en torsion (C₂) d'un des deux corps en caoutchouc (8) est au moins une fois et demie aussi grande que la rigidité en torsion (C₁) de l'autre corps en caoutchouc (4), et **en ce que** l'épaisseur de matériau axiale (S₁) d'un des deux corps en caoutchouc (4), à une distance radiale (R₁ = R) est toujours au moins une fois et demie aussi grande que l'épaisseur de matériau axiale (S₂) de l'autre corps en caoutchouc (8) pour la même distance radiale (R₂ = R).

2. Accouplement d'arbres élastique selon la revendication 1, **caractérisé en ce que** la rigidité en torsion (C₂) d'un des deux corps en caoutchouc (8) est au moins trois fois aussi grande que la rigidité en torsion (C₁) de l'autre corps en caoutchouc (4).

3. Accouplement d'arbres élastique selon la revendication 1 ou 2, **caractérisé en ce que** l'épaisseur de matériau axiale (S₁) d'un des deux corps en caoutchouc (4), dans le cas d'une distance radiale (R₁ = R) est toujours au moins trois fois aussi grande que l'épaisseur de matériau axiale (S₂) de l'autre corps en caoutchouc (8) pour la même distance radiale (R₂ = R).

4. Accouplement d'arbres élastique selon l'une des revendications précédentes, **caractérisé en ce que** le matériau d'un corps en caoutchouc (4) présente une rigidité élastique spécifique différente du matériau de l'autre corps en caoutchouc (8).

5. Accouplement d'arbres élastique selon l'une des revendications précédentes, **caractérisé en ce qu'**au moins un des corps en caoutchouc (4, 8) est segmenté.

6. Accouplement d'arbres élastique selon l'une des revendications précédentes, **caractérisé en ce qu'**au moins un des corps en caoutchouc (4, 8) est perforé axialement.
